# EUROPÄISCHE PATENTSCHRIFT

(11) **EP 2 617 205 B1**
(45) Veröffentlichungstag und Bekanntmachung des Hinweises auf die Patenterteilung: **22.06.2016**
(21) Anmeldenummer: 11764131.6
(22) Anmeldetag: 15.09.2011
(51) Int. Cl.: H04R 7/06, H04R 9/04

(54) **ELEKTRODYNAMISCHER AKTOR**
ELECTRODYNAMIC ACTUATOR
ACTIONNEUR ÉLECTRODYNAMIQUE

(30) Priorität: 15.09.2010 DE 102010045536
(43) Veröffentlichungstag der Anmeldung: 24.07.2013
(73) Patentinhaber: TRW Automotive Electronics & Components GmbH, 78315 Radolfzell (DE)
(72) Erfinder: BACKES, Ulrich, 78315 Radolfzell (DE)
(74) Vertreter: Prinz & Partner mbB
(86) Internationale Anmeldenummer: PCT/EP2011/066020
(87) Internationale Veröffentlichungsnummer: WO 2012/035106

(56) Entgegenhaltungen:
- EP-A1- 1 367 854
- EP-A1- 1 489 881
- WO-A1-2006/123263
- JP-A- 56 076 700

## Beschreibung

Die Erfindung betrifft einen elektrodynamischen Aktor.

Elektrodynamische Aktoren sind beispielsweise als Tauchspulen bekannt, die beispielsweise als Schallwandler in elektrodynamischen Lautsprechern Verwendung finden. Durch eine zylindrische Spule in einem Magnetfeld eines Permanentmagneten fließt ein elektrischer Strom und erzeugt eine Kraft auf die Spulenvorrichtung, die senkrecht zur Stromrichtung und zum Magnetfeld gerichtet ist. Eine derartige Tauchspule erfordert jedoch eine relativ aufwändige Lagerung der Spule und entsprechenden Bauraum.

Aufgabe der Erfindung ist es, einen elektrodynamischen Aktor mit einfacher und kompakter Bauweise zu schaffen.

Diese Aufgabe wird durch einen erfindungsgemäßen elektrodynamischen Aktor nach Anspruch 1 gelöst, welcher mit einer durch Leiterbahnen auf einer Fläche einer Leiterplatte gebildeten Flachspule und einem Permanentmagnet, dessen Magnetfeld Windungen der Flachspule durchsetzt, aufweist. Die Ausbildung der Spule als Flachspule durch auf der Leiterplatte gebildeten Leiterbahnen ermöglicht eine kompakte und insbesondere flache Ausbildung des Aktors sowie eine einfache Bauweise der Flachspule.

Vorteilhafte Weiterbildungen sind in den Unteransprüchen angegeben.

Weitere Vorteile und Merkmale der Erfindung ergeben sich aus der nachfolgenden Beschreibung unter Bezugnahme auf die beigefügten Zeichnungen. In den Zeichnungen zeigen:
- Figur 1 einen erfindungsgemäßen elektrodynamischen Aktor;
- Figur 2 die Unterseite der Leiterplatte des elektrodynamischen Aktors gemäß Figur 1; und
- Figur 3 die Oberseite der Leiterplatte des elektrodynamischen Aktors gemäß Figur 1.

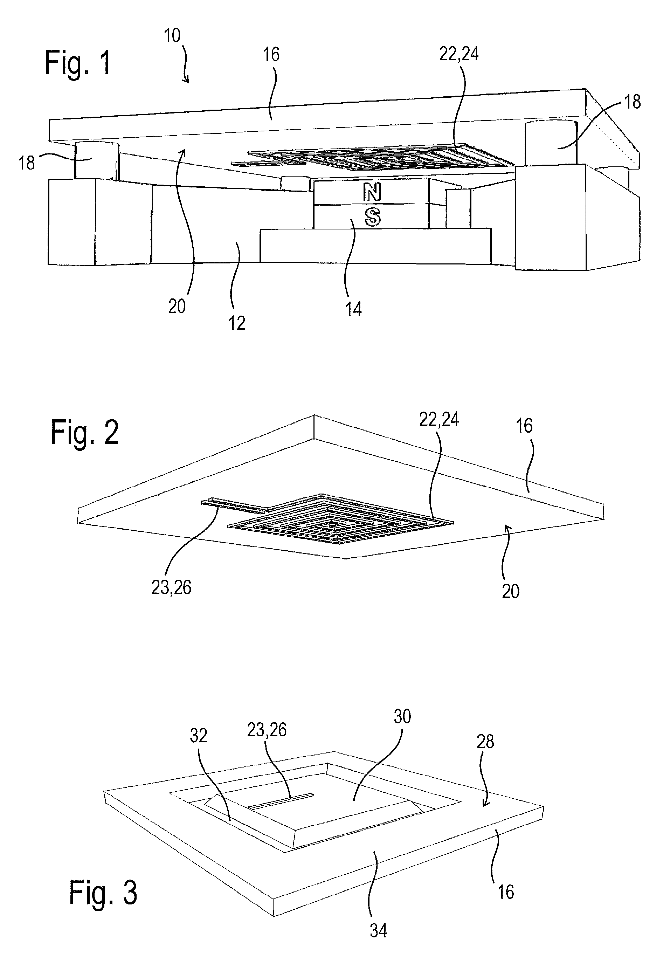

Figur 1 zeigt einen elektrodynamischen Aktor 10. Ein Träger 12 ist ausgebildet, um einen Permanentmagneten 14 aufzunehmen. Der Träger 12 ist ferner mit einer Leiterplatte 16 verbunden, wobei die Leiterplatte 16 in einem mittleren Bereich vom Träger 12 und dem Permanentmagneten 14 beabstandet ist.

Am Träger 12 sind vier Abstandshalter 18 vorgesehen, die einen vorbestimmten Abstand zwischen der Leiterplatte 16 und dem Träger 12 und dem Permanentmagneten 14 festlegen.

An der Unterseite 20 der Leiterplatte 16, welche zum Träger 12 hin orientiert ist, sind Leiterbahnen 22, 23 vorgesehen, die spiralförmig angeordnet sind und eine Flachspule 24 bilden. Das Magnetfeld des Permanentmagneten 14 durchsetzt die Windungen der Flachspule 24.

Der Permanentmagnet 14 ist in der gezeigten Ausführungsform mit seinem Nordpol in Richtung zur Leiterplatte 16 hin orientiert und ist somit koaxial mit der Flachspule 24 angeordnet. Der Pol des Permanentmagneten 14 ist mit geringem Abstand zur Leiterplatte 16 eng benachbart zum Zentrum der Flachspule 24 angeordnet.

In der gezeigten Ausführungsform ist die Ausdehnung der Permanentmagneten 14 in der Ebene der Leiterplatte 16 geringer als die Ausdehnung der Flachspule 24. Der Durchmesser der Flachspule 24 ist wesentlich größer als der Durchmesser der gegenüberliegenden Fläche des Permanentmagneten 14.

Im Folgenden wird die Leiterplatte 16 mit der Flachspule 24 anhand der Figuren 2 und 3 beschrieben.

Figur 2 zeigt die Unterseite 20 der Leiterplatte 16 mit einer ersten, spiralförmigen Leiterbahn 22, welche die Flachspule 24 bildet. Eine zweite Leiterbahn 23 bildet Teil einer Rückleitung 26. Die Rückleitung 26 verbindet das Zentrum der Flachspule 24 mit einem Anschluss am äußeren Radius der Flachspule 24.

In der gezeigten Ausführungsform ist die Flachspule 24 viereckig ausgebildet. Es kann jedoch eine kreisförmige Flachspule oder eine andere Bauweise vorgesehen sein.

Figur 3 zeigt die Oberseite 28 der Leiterplatte 16, welche vom Träger 12 und dem Permanentmagneten 14 abgewandt ist. Die Oberseite 28 der Leiterplatte 16 ist in drei Bereiche 30, 32, 34 aufgeteilt. Ein zentraler Bereich 30 entspricht der Fläche der Leiterplatte 16, auf der sich die Flachspule 24 an der Unterseite 20 der Leiterplatte 16 befindet. Im zentralen Bereich 30 ist eine Leiterbahn 23 vorgesehen, welche Teil der Rückleitung 26 bildet.

Der zentrale Bereich 30 wird durch einen verdünnten Bereich 32 vom umgebenden Bereich 34 der Leiterplatte 16 abgegrenzt.

Der umgebende Bereich 34 der Leiterplatte 16 ist starr mit dem Träger 12 verbunden. Der verdünnte Bereich 32 ist beispielsweise durch Fräsung der Leiterplatte 16 gebildet oder wird in einer durch Spritzguss hergestellten Leiterplatte 16 eingeformt.

Der verdünnte Bereich 32 ist so ausgebildet, dass eine Deformation der Leiterplatte 16 im verdünnten Bereich 32 möglich ist. Auf diese Weise wird eine Bewegung des zentralen Bereichs 30 gegenüber dem umgebenden Bereich 34 in Richtung senkrecht zur Ebene der Leiterplatte 16 ermöglicht.

In der gezeigten Ausführungsform sind die Leiterbahnen durch MID-Technologie hergestellt.

Die Flachspule 24 ist mit auf der Leiterplatte 16 angeordneten Elektronikkomponenten einer Ansteuereinheit verbunden. Die Elektronikkomponenten der Ansteuereinheit sind der Übersichtlichkeit halber in den Figuren nicht dargestellt.

Der Aktor 10 findet beispielsweise Verwendung als Antrieb eines akustischen Signalgebers oder als Antrieb eines haptischen Signalgebers in einem Eingabesystem.

In der gezeigten Ausführungsform ist der Permanentmagnet 14 koaxial mit der Flachspule 24 angeordnet. Die Flachspule 24 ist dabei im inhomogenen Magnetfeld in geringem Abstand zum Pol des Permanentmagneten 14 angeordnet.

Wird Strom durch die Flachspule 24 geleitet, so erzeugt die Flachspule 24 ein starkes Magnetfeld im Zentrum der Flachspule 24, welches je nach Stromrichtung gleich oder entgegengesetzt zum Magnetfeld des Permanentmagneten 14 ausgerichtet ist. Da das inhomogene Magnetfeld des Permanentmagneten 14 im Randbereich der Flachspule 24 schwächer ist und/oder eine andere Richtung aufweist als im Zentrum der Flachspule 24, wird eine Kraft erzeugt, die im zentralen Bereich 30 der Leiterplatte 16 in axialer Richtung zum Permanentmagneten 14 hin bzw. vom Permanentmagneten 14 fort beaufschlagt.

Da die Leiterplatte 16 im verdünnten Bereich 32 flexibel ausgebildet ist, wird der zentrale Bereich der Leiterplatte 16 in Abhängigkeit von der Richtung des Stromflusses durch die Flachspule 24 in axialer Richtung bewegt.

## Patentansprüche

1. Elektrodynamischer Aktor (10) mit einer durch Leiterbahnen (22, 23) auf einer Fläche einer Leiterplatte (16) gebildeten Flachspule (24) und einem Permanentmagnet (14), dessen Magnetfeld Windungen der Flachspule (24) durchsetzt, wobei die Fläche der Leiterplatte (16), auf der sich die Flachspule (24) befindet, durch einen verdünnten Bereich (32) vom umgebenden Bereich (34) der Leiterplatte (16) abgegrenzt ist.

2. Aktor nach Anspruch 1, bei dem der umgebende Bereich der Leiterplatte (16) starr mit einem Träger (12) des Permanentmagneten (14) verbunden ist.

3. Aktor nach Anspruch 1 oder 2, bei dem der verdünnte Bereich (32) durch Fräsung gebildet ist.

4. Aktor nach Anspruch 1 oder 2, bei dem der verdünnte Bereich (32) in einer durch Spritzguss hergestellten Leiterplatte (16) eingeformt ist.

5. Aktor nach Anspruch 4, bei dem die Leiterbahnen (22, 23) durch MID-Technologie hergestellt sind.

6. Aktor nach einem der vorstehenden Ansprüche, bei dem der Permanentmagnet (14) koaxial mit der Flachspule (24) sowie mit einem seiner Pole eng benachbart zum Zentrum der Flachspule (24) angeordnet ist.

7. Aktor nach einem der vorstehenden Ansprüche, bei dem die Flachspule (24) mit auf der Leiterplatte (16) angeordneten Elektronikkomponenten einer Ansteuereinheit verbunden ist.

8. Akustischer Signalgeber mit einem Aktor nach Anspruch 7, als Antrieb des akustischen Signalgebers.

9. Haptischer Signalgeber in einem Eingabesystem mit einem Aktor nach Anspruch 7, als Antrieb des haptischen Signalgebers

## Claims

1. An electrodynamic actuator (10) comprising a flat coil (24) formed by conductor tracks (22, 23) on a surface of a circuit board (16) and a permanent magnet (14) the magnetic field of which passes through turns of the flat coil (24), wherein the surface of the circuit board (16) on which the flat coil (24) is located is delimited from the surrounding region (34) of the circuit board (16) by a thinned region (32).

2. The actuator according to claim 1, in which the surrounding region of the circuit board (16) is rigidly connected with a carrier (12) of the permanent magnet (14).

3. The actuator according to claim 1 or 2, in which the thinned region (32) is formed by milling.

4. The actuator according to claim 1 or 2, in which the thinned region (32) is molded into a circuit board (16) produced by injection molding.

5. The actuator according to claim 4, in which the conductor tracks (22, 23) are produced by MID technology.

6. The actuator according to any of the preceding claims, in which the permanent magnet (14) is arranged coaxially with the flat coil (24) and so as to have one of its poles closely adjacent to the center of the flat coil (24).

7. The actuator according to any of the preceding claims, in which the flat coil (24) is connected to electronic components of a drive unit which are arranged on the circuit board (16).

8. An acoustic signal generator comprising an actuator according to claim 7 as a drive of the acoustic signal generator.

9. A haptic signal generator in an input system, comprising an actuator according to claim 7 as a drive of the haptic signal generator.

## Revendications

1. Actionneur électrodynamique (10) présentant une bobine plate (24) formée par des pistes conductrices (22, 23) sur une surface d'une carte de circuits imprimés (16) et un aimant permanent (14) dont le champ magnétique passe a travers des spires de la bobine plate (24), la surface de la carte de circuits imprimés (16) sur laquelle se trouve la bobine plate (24) étant délimitée de la zone (34) entourant la carte de circuits imprimés (16) par une zone réduite (32).

2. Actionneur selon la revendication 1, dans lequel la zone entourant la carte de circuits imprimés (16) est reliée de manière rigide à un support (12) de l'aimant permanent (14).

3. Actionneur selon la revendication 1 ou 2, dans lequel la zone réduite (32) est formée par fraisage.

4. Actionneur selon la revendication 1 ou 2, dans lequel la zone réduite (32) est moulée dans une carte de circuits imprimés (16) réalisée par moulage par injection.

5. Actionneur selon la revendication 4, dans lequel les pistes conductrices (22, 23) sont réalisées selon la technologie MID.

6. Actionneur selon l'une des revendications précédentes, dans lequel l'aimant permanent (14) est agencé de manière coaxiale par rapport à la bobine plate (24) et de sorte que l'une de ses pôles est adjacent de manière serrée au centre de la bobine plate (24).

7. Actionneur selon l'une des revendications précédentes, dans lequel la bobine plate (24) est reliée à des composants électroniques d'une unité de pilotage agencés sur la carte de circuits imprimés (16).

8. Générateur de signaux acoustique comportant un actionneur selon la revendication 7 en tant qu'entraînement du générateur de signaux acoustique.

9. Générateur de signaux haptique dans un système d'entrée comportant un actionneur selon la revendication 7 en tant qu'entraînement du générateur de signaux haptique.
